(19) Europäisches Patentamt
European Patent Office
Office européen des brevets

(11) Veröffentlichungsnummer : **0 350 832 B1**

(12) # EUROPÄISCHE PATENTSCHRIFT

(45) Veröffentlichungstag der Patentschrift : **09.10.91 Patentblatt 91/41**

(51) Int. Cl.$^5$ : **B23C 3/12,** B29C 37/04

(21) Anmeldenummer : **89112570.0**

(22) Anmeldetag : **10.07.89**

(54) **Ausseneck-Verputzvorrichtung für Fensterrahmen od.dgl.**

(30) Priorität : **12.07.88 DE 3823564**

(43) Veröffentlichungstag der Anmeldung : **17.01.90 Patentblatt 90/03**

(45) Bekanntmachung des Hinweises auf die Patenterteilung : **09.10.91 Patentblatt 91/41**

(84) Benannte Vertragsstaaten : **AT BE CH DE ES FR GB IT LI NL SE**

(56) Entgegenhaltungen :
**DE-A- 2 049 925**
**DE-A- 2 236 087**

(56) Entgegenhaltungen :
**DE-A- 3 310 307**
**DE-B- 2 036 333**
**DE-C- 2 408 883**
**DE-C- 2 930 309**

(73) Patentinhaber : **Eisenbach, Bernhard**
**Taunusstrasse 24**
**W-6259 Brechen 1 (DE)**

(72) Erfinder : **Eisenbach, Bernhard**
**Taunusstrasse 24**
**W-6259 Brechen 1 (DE)**

(74) Vertreter : **Katscher, Helmut, Dipl.-Ing.**
**Bismarckstrasse 29**
**W-6100 Darmstadt (DE)**

EP 0 350 832 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Außeneck-Verputzvorrichtung für aus stumpfgeschweißten Kunststoffprofilen bestehende Fensterrahmen od.dgl. zum Verputzen einer an der Schweißnaht überstehenden Schweißraupe, mit einem in der Rahmenebene liegenden Kreissägeblatt, das von einem Motor antreibbar und mittels einer mit einer Tastvorrichtung verbundenen Steuerung axial und in Richtung zur Bearbeitungsstelle radial bewegbar ist.

Verputzvorrichtungen für die Außenecken von stumpfgeschweißten Fensterrahmen, Türrahmen oder ähnlichen Rahmen dienen dazu, die an der Schweißnaht infolge des Stumpfschweißvorgangs der Kunststoffprofile entstandene, nach außen überstehende Schweißraupe zu entfernen. Da die Kunststoffprofile vor dem Verschweißen unter 45° auf Gehrung geschnitten sind, verläuft die Ebene der Schweißnaht unter 45° zu den benachbarten, miteinander verschweißten Rahmenschenkeln.

Während für das Verputzen der Sichtflächen Fräser oder Abstechmesser entlang der Schweißnaht bewegt werden, ist es bekannt, zum Entfernen der Schweißraupe am Außeneck einen Profilfräser zu verwenden (DE-C 2408883), der an die Kontur des Außenecks angepaßt ist und in einer kurzen Schwenkbewegung senkrecht zur Ebene der Schweißnaht am Außeneck vorbeibewegt wird. Hierbei ist es erforderlich, für unterschiedliche Rahmenprofile auch unterschiedliche Profilfräser zu verwenden.

Diese Schwierigkeit soll bei einer anderen bekannten Außeneck-Verputzvorrichtung (DE-A 3310307) dadurch überwunden werden, daß anstelle eines Profilfräsers ein Kreissägeblatt verwendet wird, das mittels einer zweiachsigen Bahnsteuerung entlang der abzuarbeitenden Schweißraupe geführt wird. Die Bearbeitungsstelle folgt dabei der Profilkontur der Schweißnaht am Außeneck des Rahmens. Diese Profilkontur muß in der Bahnsteuerung für jedes zu bearbeitende Profil immer wieder neu programmiert werden. Für diese Bahnsteuerung ist ein hoher elektronischer Aufwand erforderlich, wodurch die Maschine verhältnismäßig teuer ist. Außerdem arbeitet die Maschine verhältnismäßig langsam.

Daneben ist bei der bekannten Maschine auch vorgesehen, die abzufahrende Profilkontur als Schablone vorzugeben, die die Bewegung des Kreissägeblattes steuert.

Beiden Ausführungsformen ist gemeinsam, daß sowohl in der Programmsteuerung wie auch in der Schablone nur ein Sollverlauf gespeichert sein kann, von dem der Istverlauf der abzuarbeitenden Schweißraupe infolge von Profiltoleranzen und Schweißungenauigkeiten in den meisten Fällen abweicht. Die Folge ist, daß die Schweißraupe entweder unzureichend abgearbeitet wird oder ein unnötig tiefer Eingriff in das Kunststoffprofil erfolgt.

Es ist zwar bekannt, bei einer Verputzvorrichtung das Verputzwerkzeug, nämlich einen Scheibenfräser oder ein Abstechmesser, durch Abtasten der neben der Schweißnaht liegenden Profiloberflächen zu führen. Hierbei handelt es sich aber nur um die Bearbeitung der Schweißraupen in der Sichtfläche des Rahmens ; bei derselben Maschine erfolgt das Verputzen des Außenecks durch einen Profilfräser, der dem Sollprofil entspricht und bei dem Abweichungen des Istprofils ebenfalls nicht berücksichtigt werden können.

Aufgabe der Erfindung ist es daher, ausgehend von nächstkommenden Stand der Technik gemäß DE-A 3310307 eine Außeneck-Verputzvorrichtung der eingangs genannten Gattung zu schaffen, die von einfachem konstruktivem Aufbau ist und ohne aufwendige Elektronik, insbesondere ohne Bahnsteuerung oder Schablonensteuerung auskommt, dabei aber eine Anpassung an Abweichungen des Istprofils vom Sollprofil infolge von Profiltoleranzen oder Schweißtoleranzen ermöglicht. Außerdem soll in einfacher Weise eine Umstellung auf unterschiedliche Profile erreicht werden.

Diese Aufgabe wird erfindungsgemäß dadurch gelöst, daß die Tastvorrichtung mindestens einen zusammen mit dem Kreissägeblatt axial und radial bewegbaren Taster aufweist, der den Fensterrahmen an einer Taststelle antastet, die in der Ebene des Kreissägeblattes liegt und gegenüber der Bearbeitungsstelle seitlich und zum Fensterrahmen hin versetzt ist, und daß der Taster bei einer Auslenkung in der Rahmenebene und senkrecht dazu jeweils eine radiale bzw. axiale Bewegung des Kreissägeblattes schaltet.

Der Taster kann als ein einziger, in der Rahmenebene und senkrecht dazu ansprechender Taster ausgeführt sein ; stattdessen kann auch ein in der Rahmenebene ansprechender Taster und ein senkrecht dazu ansprechender Taster verwendet werden.

Auf diese Weise wird die tatsächliche Profilkontur an einer in der Bearbeitungsebene liegenden Taststelle erfaßt, die gegenüber der Bearbeitungsstelle versetzt ist. Da das Rahmenprofil selbst die Bewegung des Kreissägeblattes steuert, erfolgen diese Bewegungen in weitgehend genauer Anpassung an den Istverlauf des Rahmenprofils, wobei Abweichungen vom Sollverlauf infolge von Profiltoleranzen und/oder Schweißtoleranzen selbsttätig berücksichtigt werden. Ebenso erfolgt selbsttätig und in sehr einfacher Weise eine Anpassung an unterschiedliche Rahmenprofile.

Die erfindungsgemäße Verputzvorrichtung kann mit wesentlich geringerem Bauaufwand hergestellt werden, da sie ohne Elektronikprogramme oder Schablonen arbeitet. Fehlermöglichkeiten infolge von Programmier- oder Bedienungsfehlern, falscher Auswahl einer Schablone oder Ungenauigkeiten beim Ausrichten einer Schablone sind ausgeschlossen. Der Arbeitsaufwand beim Umstellen auf ein anderes Profil durch Programmänderung oder Austausch von Schablonen entfällt vollständig.

Vorteilhafte Ausgestaltungen des Erfindungsgedankens sind Gegenstand weiterer Unteransprüche.

Nachfolgend wird ein Ausführungsbeispiel der Erfindung näher beschrieben, das in der Zeichnung dargestellt ist. Es zeigt:

Fig. 1 eine Seitenansicht einer Außeneck-Verputzvorrichtung, wobei Teile des Maschinengestells und der Aufspanneinrichtung für den zu bearbeitenden Rahmen weggelassen sind,

Fig. 2 einen Teilschnitt längs der Linie II-II in Fig. 1,

Fig. 3 eine Draufsicht auf die Verputzvorrichtung nach den Fig. 1 und 2,

Fig. 4 eine Tabelle der Tasterstellungen und der Position und Vorschubrichtung der Verputzvorrichtung nach den Fig. 1 bis 3,

Fig. 5 die Verputzvorrichtung nach Fig. 1 bis 3 in einer Darstellung entsprechend der Fig. 2 bei der Bearbeitung eines breiten Altbau-Profils und

Fig. 6 in einem Teilschnitt eine abgewandelte Ausführungsform des Bearbeitungswerkzeugs.

Ein in den Fig. 1 bis 3 nur teilweise dargestelltes Maschinengestell 1 weist eine Aufspannfläche 2 auf, auf der ein zu bearbeitender Rahmen 3, beispielsweise ein Fensterrahmen oder ein Türrahmen mittels einer (nicht dargestellten) Aufspanneinrichtung aufgespannt ist. Der Rahmen 3 besteht aus an den Ecken stumpfgeschweißten Kunststoffprofilen. Der in Fig. 2 gewählte Schnitt verläuft in der Ebene einer die Kunststoffprofile am Eck verbindenden Schweißnaht 4, von der am Außeneck eine überstehende Schweißraupe 5 entfernt werden soll.

Hierzu dient ein als Kreissägeblatt 6 ausgeführter schmaler Scheibenfräser, der mit senkrechter Drehachse an der Welle 7 eines Motors 8 aufgenommen ist. Der Motor 8 ist auf einem Kreuzschlitten 9 an einem mit dem Maschinengestell 1 verbundenen Träger 10 horizontal und vertikal verschiebbar. Die horizontale und vertikale Bewegung des Motors 8 erfolgt über Schrittmotore oder Spindelmotore 11 und 12, die Antriebsspindeln 13, 14 antreiben.

Wie man besonders deutlich aus Fig. 3 erkennt, erfolgt die horizontale bzw. vertikale Bewegung des Kreissägeblattes 6 radial in der Ebene des Rahmens 3 in Richtung der Schweißnaht 4 und axial senkrecht zur Rahmenebene.

An einem den Motor 8 tragenden Schlitten 15 ist ein Taster 16 so gelagert, daß er bei einer Tastberührung in der Rahmenebene sowie senkrecht dazu anspricht. Hierzu weist der Taster 16 einen Tastarm 16c auf, der an einer Tasterwelle 16d angebracht ist, die achsparallel zum Motor 8 des Kreissägeblattes 6 schwenkbar und axial verschiebbar am Schlitten 15 gelagert ist. Am entgegengesetzten, oberen Ende der Tasterwelle 16d ist ein Schaltarm 19 angebracht, der mit einem Schalter 20, beispielsweise einem Näherungsschalter, in Wirkverbindung steht.

Ein zweiter Schalter 21, beispielsweise ebenfalls ein Näherungsschalter, ist senkrecht über dem Schaltarm 19 angeordnet.

Eine horizontale Feder 22 und eine vertikale Feder 23 drücken den Schaltarm 19 bzw. die Tasterwelle 16d ständig in eine in Fig. 3 gestrichelt dargestellte Schwenkstellung nach rechts sowie nach unten.

Die Schalter 20 und 21 dienen der Steuerung der Motore 11 und 12, wobei die von den Schaltern 20 und 21 gelieferten Schaltsignale in einer später noch erläuterten Weise miteinander verknüpft werden.

Wie man besonders deutlich aus Fig. 2 erkennt, liegt die untere axiale Tastfläche 16a des Tasters 16 in seiner Ruhelage in der unteren Stirnfläche 6a des Kreissägeblattes 6, während eine obere Tastfläche 16b des Tasters 16 über die obere Stirnfläche 6b des Kreissägeblattes 6 hinausragt. Die untere Stirnfläche 6a des Kreissägeblattes 6 ist glattbündig. Die Schwenkbewegung des Tasters 16 erfolgt so, daß sich der Taster angenähert senkrecht zur Ebene der Schweißnaht 4 bewegt.

Der Arbeitsablauf und die Funktionsweise der Außeneck-Verputzvorrichtung werden nachfolgend insbesondere anhand der Tabelle nach Fig. 4 erläutert.

Nach dem Einlegen des Rahmens 3 wird der Scheibenfräser bzw. das Kreissägeblatt 6 zur Rahmenecke hin verfahren (Pos. 1 in der Tabelle nach Fig. 4). Die auf der Höhe der Bearbeitungsstelle 17 liegende Taststelle 18, d.h. die Berührungsstelle des Tasters 16 mit dem Rahmen 3, ist gegenüber der Bearbeitungsstelle 17 seitlich und in Richtung zum Rahmen 3 hin versetzt. Die Taststelle 18 liegt in einer senkrechten Ebene, die unter 45° zur Ebene der Schweißnaht 4 zur Bearbeitungsstelle 17 hin verläuft.

Sobald der Taster 16 die Profilfläche 3a an der Taststelle 18 erreicht hat, wird er (in Fig. 3 entgegen dem Uhrzeigersinn) verschwenkt, bis der Näherungsschalter 20 den Motor 12 für die Vorschubbewegung zum Rahmen 3 hin abschaltet. Zugleich wird eine Senkrechtbewegung nach oben durch den Motor 11 eingeschaltet (Pos. 2).

Diese senkrechte Vorschubbewegung wird ausgeführt, bis die obere Tastfläche 16b des Tasters 16 gegen eine obere Profilfläche fährt (Pos. 3) und den Näherungsschalter 21 betätigt. Diese Schalterstellung leitet eine Rückwärtsbewegung vom Rahmen 3 weg ein.

Sobald der Taster 16 hinter der Profilkante angelangt ist und in senkrechter Richtung freigegeben wird, wird er durch die Druckfeder 23 nach oben geschoben, wobei der Näherungsschalter 21 betätigt wird. Diese Schalterstellung (Pos. 4) bewirkt, daß die horizontale Rückwärtsbewegung abgeschaltet und die Bewegung nach oben eingeschaltet wird. Diese Bewegung hält solange an, bis der Taster 16 die Werkstückkante verlassen hat und wieder nach innen in die in Fig. 3 gestrichelt dargestellte Stellung schwenkt. Durch den Näherungsschalter 20 wird dann die Aufwärtsbewegung angehalten und eine Bewegung in horizontaler Richtung auf den Rahmen 3 zu wird eingeleitet (Pos. 5). Diese Bewegung hält wiederum solange an, bis der Taster 16 erneut auf eine Werkstückfläche trifft (Pos. 6).

Dann wird eine Aufwärtsbewegung eingeschaltet, bis der Taster das Profil verläßt (Pos.7). Über einen nicht dargestellten Schalter wird nun eine Rückwärtsbewegung eingeleitet ; über einen zweiten nicht dargestellten Schalter wird eine Bewegung nach unten eingeleitet. Das Kreissägeblatt 6 läuft dadurch wieder in seine Ausgangsstellung.

Im unteren Teil der Fig. 4 ist schematisch dargestellt, daß für die Steuerung der Motoren 11 und 12 für die axiale und radiale Bewegung des Kreissägeblattes 6 anstelle des einzigen, in horizontaler und vertikaler Richtung ansprechenden Tasters 16 auch zwei Taster verwendet werden können. Ein Taster 16′ spricht nur in senkrechter Richtung an, während ein zweiter Taster 16″ nur in horizontaler Richtung anspricht. Jedem dieser beiden Taster 16′ und 16″ ist dann einer der beiden Schalter 20 und 21 zugeordnet. Die Anordnung der beiden Taster 16′ und 16″ muß jedoch so getroffen werden, daß in der Pos. 3 der waagerechte Taster 16″ von dem senkrechten Taster 16′ geschleppt wird.

Damit auch breite Profile (Altbau-Profile) verputzt werden können, muß die Unterseite 6a des Kreissägeblattes 6 glattbündig sein, d.h. es dürfen keine Befestigungsteile vorstehen. Die Bearbeitung eines solchen Altbau-Profils 3′ ist in Fig. 5 gezeigt. Man erkennt, daß trotz großer Profilbreite ein Kreissägeblatt 6 von verhältnismäßig kleinem Durchmesser verwendet werden kann.

Das Kreissägeblatt 6 bzw. ein sägeblattähnlicher schmaler Scheibenfräser muß entweder so tiefe Zähne aufweisen, daß die Gesamttiefe einer Profilnut beim Aufwärtsfahren verputzt werden kann, oder das Kreissägeblatt bzw. der Scheibenfräser hat zumindest an seiner Oberseite so weit vorstehende Schneidenkanten 6c, daß diese bei der Auswärtsbewegung des Kreissägeblattes 6 aus einer Profilnut heraus die Oberseite der Profilnut verputzen (Fig. 6).

## Patentansprüche

1. Außeneck-Verputzvorrichtung für aus stumpfgeschweißten Kunststoffprofilen bestehenden Fensterrahmen (3) od.dgl. zum Verputzen einer an der Schweißnaht (4) überstehenden Schweißraupe, mit einem in der Rahmenebene liegenden Kreissägeblatt (6), das von einem Motor (8) antreibbar und mittels einer mit einer Tastvorrichtung verbundenen Steuerung axial und in Richtung zur Bearbeitungsstelle radial bewegbar ist, dadurch gekennzeichnet, daß die Tastvorrichtung mindestens einen zusammen mit dem Kreissägeblatt (6) und relativ dazu axial und radial bewegbaren Taster (16, 16′, 16″) aufweist, der den Fensterrahmen (3) an einer Taststelle (18) antastet, die in der Ebene des Kreissägeblattes (6) liegt und gegenüber der Bearbeitungsstelle (17) seitlich und zum Fensterrahmen (3) hin versetzt ist, und daß der Taster (16, 16′, 16″) bei einer Auslenkung in der Rahmenebene und senkrecht dazu jeweils eine radiale bzw. axiale Bewegung des Kreissägeblattes (6) schaltet.

2. Außeneck-Verputzvorrichtung nach Anspruch 1, dadurch gekennzeichnet, daß ein einziger Taster (16) verwendet wird, der in der Rahmenebene und senkrecht dazu auslenkbar ist.

3. Außeneck-Verputzvorrichtung nach Anspruch 1, dadurch gekennzeichnet, daß ein in der Rahmenebene auslenkbarer Taster (16″) und ein senkrecht dazu auslenkbarer Taster (16′) verwendet werden.

4. Außeneck-Verputzvorrichtung nach einem der Ansprüche 1 oder 2, dadurch gekennzeichnet, daß der Taster (16) einen in der Rahmenebene schwenkbaren und senkrecht dazu verschiebbaren Tastarm (16c) aufweist.

5. Außeneck-Verputzvorrichtung nach Anspruch 4, dadurch gekennzeichnet, daß der Tastarm (16c) an einer Tasterwelle (16d) angebracht ist, die achsparallel zum Motor (8) des Kreissägeblattes (6) schwenkbar und axial verschiebbar gelagert ist.

6. Außeneck-Verputzvorrichtung nach Anspruch 5, dadurch gekennzeichnet, daß die Tasterwelle (16d) an ihrem den Tastarm (16c) abgekehrten Ende mit mindestens einem Schaltarm (19) versehen ist, der einen die Schwenkbewegung erfassenden Schalter (20) und einen die axiale Bewegung erfassenden Schalter (21) betätigt.

7. Außeneck-Verputzvorrichtung nach einem der Ansprüche 1 bis 6, dadurch gekennzeichnet, daß die Tasterauslenkung in der Rahmenebene angenähert quer zur Ebene der Schweißnaht (4) erfolgt.

8. Außeneck-Verputzvorrichtung nach einem der Ansprüche 1 bis 7, dadurch gekennzeichnet, daß der oder die Taster (16, 16′, 16″) durch mindestens eine Feder (22, 23) in eine Ruhelage gedrückt wird bzw. werden und daß die Schalterbetätigung bei einer Auslenkung des Tasters (16, 16′, 16″) gegen die Kraft der Feder (22 bzw. 23) erfolgt.

9. Außeneck-Verputzvorrichtung nach Anspruch 8, dadurch gekennzeichnet, daß die eine axiale Tastfläche (16a) des Tasters (16) in seiner Ruhelage in einer der Stirnflächen (6a) des Kreissägeblattes (6) liegt und die andere axiale Tastfläche (16b) über die andere Stirnfläche (6b) des Kreissägeblattes (6) hinausragt.

10. Außeneck-Verputzvorrichtung nach Anspruch 1, dadurch gekennzeichnet, daß das Kreissägeblatt (6) mindestens an seiner einen Stirnfläche (6b) axial vorstehende Schneidenkanten (6c) aufweist.

## Claims

1. Outside corner cleaning-up device for window frames (3) or the like comprising butt-welded plastics profiles, for cleaning up a welding bead protruding on the weld seam (4), having a circular saw blade (6) which lies in the plane of the frame, which can be driven by a motor (8) and can be moved axially by means of a control connected to a contact device and radially in a direction towards the machining point, characterised in that the contact device has at least one touch probe (16, 16′, 16″) wihch can be moved axially and radially with the circular saw blade (6) and relatively to this, contacting the window frame (3) at a contact point (18) which lies in the plane of the circular saw blade (6), and is displaced sideways in relation to the machining point (17) and towards the window frame (3), and that the touch probe (16, 16′, 16″), in the event of an excursion in the plane of the frame and perpendicularly to this, in each case initiates respectively a radial or axial movement of the circular saw blade (6).

2. Outside corner cleaning-up device according to Claim 1, characterised in that a single touch probe (16) is used, which can be deflected in the plane of the frame and perpendicularly to this.

3. Outside corner cleaning-up device according to Claim 1, characterised in that a touch probe (16″) which can be deflected in the plane of the frame and a touch probe (16′) which can be deflected perpendicularly to this are used.

4. Outside corner cleaning-up device according to one of Claims 1 or 2, characterised in that the touch probe (16) has a slideable probe arm (16c) which can be swivelled in the plane of the frame and perpendicularly to it.

5. Outside corner cleaning-up device according to Claim 4, characterised in that the probe arm (16c) is fitted to a probe shaft (16d) which is supported so that it can be swivelled on an axis parallel to the motor (8) of the circular saw blade (6) and can slide axially.

6. Outside corner cleaning-up device according to Claim 5, characterised in that the probe shaft (16d) is fitted at its end turned away from the probe arm (16c) with at least one switch arm (19) which operates a switch (20) which detects the swivelling movement and a switch (21) which detects the axial movement.

7. Outside corner cleaning-up device according to one of Claims 1 to 6, characterised in that the touch probe excursion takes place in the plane of the frame approximately transversely to the plane of the weld seam (4).

8. Outside corner cleaning-up device according to one of Claims 1 to 7, characterised in that the touch probe or probes (16, 16′, 16″) is or are forced into a position of rest by at least one spring (22, 23) and that the switch operation in the event of an excursion of the touch probe (16, 16′, 16″) takes place against the force of the spring (22 or 23).

9. Outside corner cleaning-up device according to Claim 8, characterised in that the one axial probe surface (16a) of the touch probe (16) at its position of rest lies in one of the front surfaces (6a) of the circular saw blade (6) and the other axial probe surface (16b) projects over the other front surface (6b) of the circular saw blade (6).

10. Outside corner cleaning-up device according to Claim 1, characterised in that the circular saw blade (6) has, at least on its one front surface (6b), axially projecting cutting edges (6c).

## Revendications

1. Dispositif à ébarber les coins extérieurs pour châssis de fenêtres (3) ou similaires constitués de profilés de plastique soudés en bout, afin d'ébarber un cordon de soudure faisant saillie sur le joint soudé (4) avec une lame de scie circulaire (6) située dans le plan du châssis, qui peut être entraînée par un moteur (8) et qui peut se déplacer axialement et radialement en direction du point d'usinage au moyen d'une commande connectée à un dispositif de palpage, caractérisé en ce que le dispositif de palpage présente au moins un palpeur (16, 16′, 16″) pouvant se déplacer axialement et radialement avec la lame de scie circulaire (6) et relativement à celle-ci, ce palpeur palpant un point de palpage (18) sur le châssis de fenêtre (3) lequel est situé dans le plan de la lame de scie circulaire (6) et est décalé latéralement par rapport au point d'usinage (17) et vers le châssis de fenêtre (3), et en ce que le palpeur (16, 16′, 16″) enclenche un déplacement radial ou axial de la lame de scie circulaire (6) en cas de déviation dans le plan du châssis et perpendiculairement à celui-ci.

2. Dispositif d'ébarbage pour coins extérieurs selon la revendication 1, caractérisé en ce que l'on utilise un seul palpeur (16) qui peut s'écarter dans le plan du châssis et perpendiculairement à celui-ci.

3. Dispositif d'ébarbage pour coins extérieurs selon la revendication 1, caractérisé en ce que l'on utilise un palpeur (16″) pouvant s'écarter dans le plan du châssis et un palpeur (16′) pouvant s'écarter perpendiculairement à celui-ci.

4. Dispositif d'ébarbage pour coins extérieurs selon l'une des revendications 1 ou 2, caractérisé en ce que le palpeur (16) présente un bras de palpage (16c) pouvant pivoter dans le plan du châssis et perpendiculairement à celui-ci.

5. Dispositif d'ébarbage pour coins extérieurs selon la revendication 4, caractérisé en ce que le bras de palpage (16c) est monté sur un arbre de palpeur (16d) qui est disposé de manière à pouvoir pivoter parallèlement à l'axe du moteur (8) de la lame à scie circulaire (6) et à pouvoir se déplacer axialement.

6. Dispositif d'ébarbage pour coins extérieurs selon la revendication 5, caractérisé en ce que l'arbre de palpeur (16d) est pourvu, à son extrémité opposée au bras de palpage (16c), d'au moins un bras de commutation (19) qui actionne un commutateur (20) détectant le mouvement de pivotement, et un commutateur (21) détectant le déplacement axial.

7. Dispositif d'ébarbage pour coins extérieurs selon l'une des revendications 1 à 6, caractérisé en ce que la déviation du palpeur dans le plan du châssis se produit approximativement dans le sens transversal par rapport au plan du joint soudé (4).

8. Dispositif d'ébarbage pour coins extérieurs selon l'une des revendications 1 à 7, caractérisé en ce que le ou les palpeur(s) (16, 16', 16") est (sont) poussé(s) par au moins un ressort (22, 23) en position de repos et en ce que les commutateurs sont actionnés par un déplacement du palpeur (16, 16', 16") à l'encontre de la force des ressorts (22 ou 23).

9. Dispositif d'ébarbage pour coins extérieurs selon la revendication 8, caractérisé en ce que l'une des surfaces de palpage axiales (16a) du palpeur (16) se trouve en position de repos dans l'une des surfaces frontales (6a) de la lame de scie circulaire (6) et que l'autre surface de palpage axiale (16b) fait saillie au-delà de l'autre surface frontale (6b) de la lame de scie circulaire (6).

10. Dispositif d'ébarbage pour coins extérieurs selon la revendication 1, caractérisé en ce que la lame de scie circulaire (6) présente au moins un bord tranchant (6c) faisant saillie axialement sur l'une de ses surfaces frontales (6b).

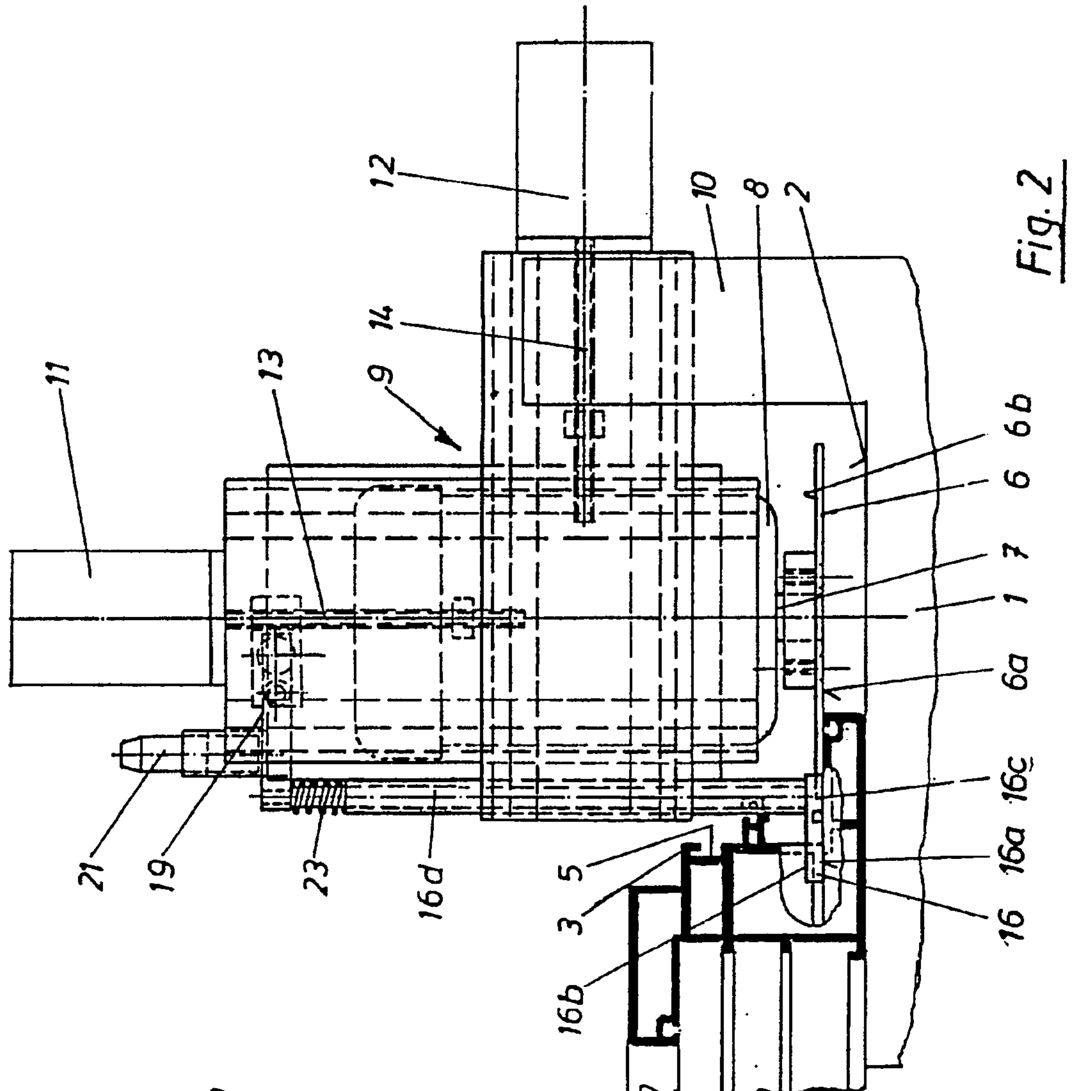
11
13
9
14
12
10
8
2
6b
6
7
1
6a
16c
16a
16
16b
3
5
16d
23
19
21
Fig. 2

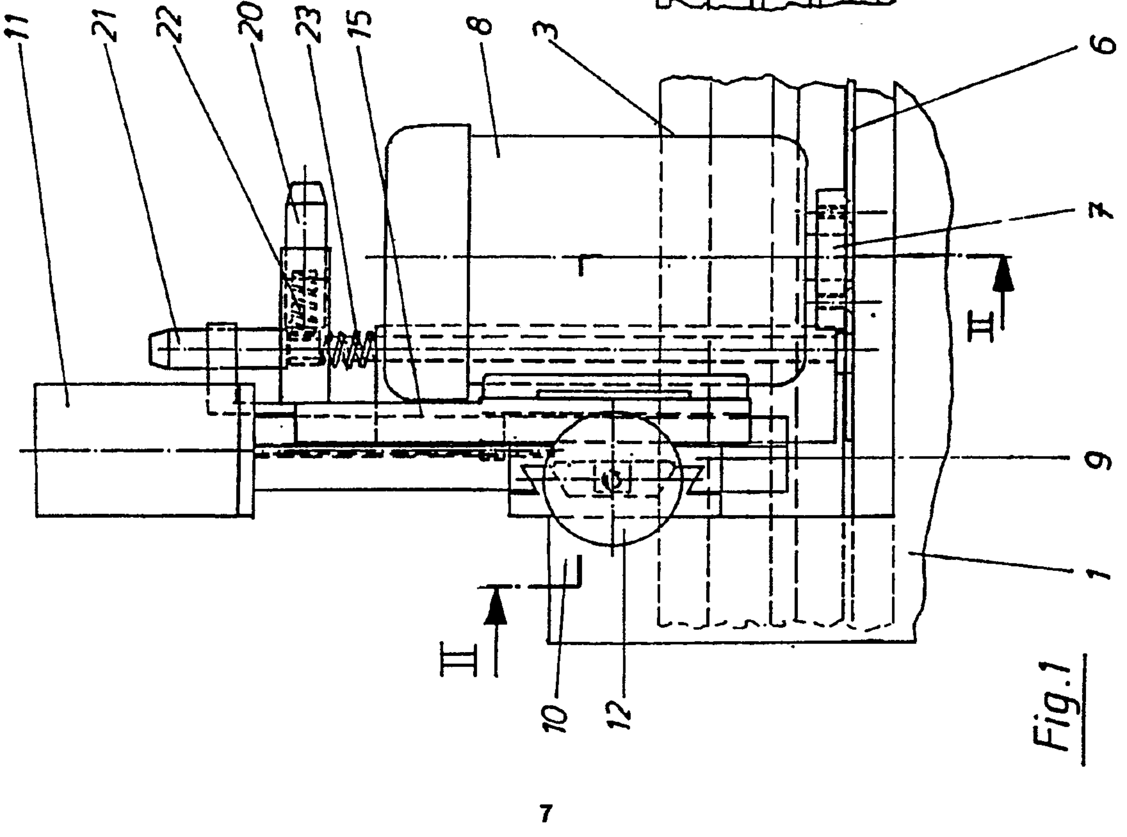
11
21
22
20
23
15
8
3
6
7
II
9
1
10
12
II
Fig.1

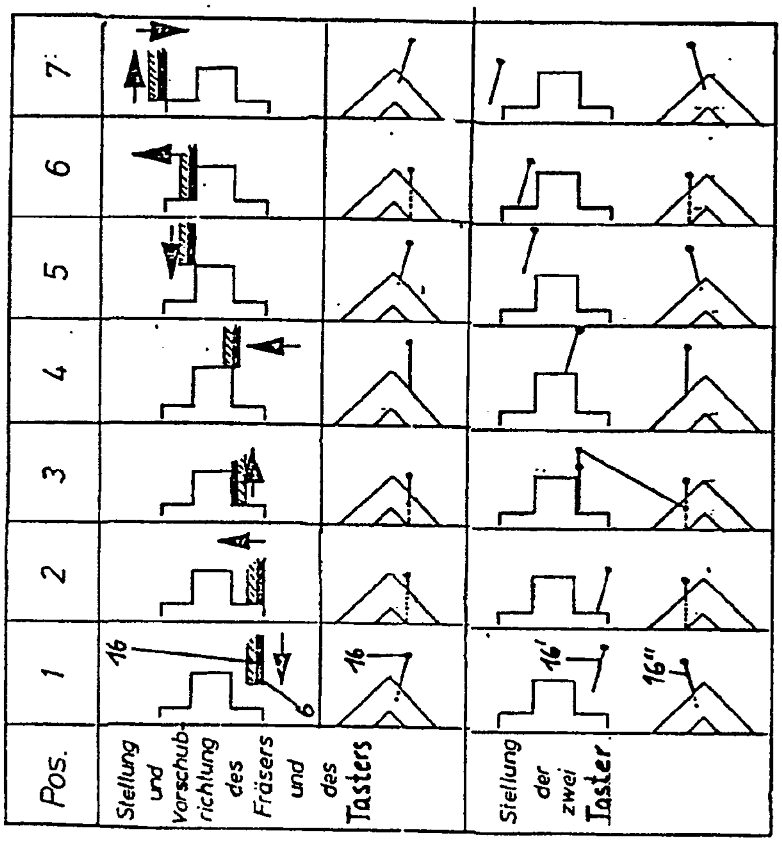
Pos.
1
2
3
4
5
6
7
Stellung und Vorschubrichtung des Fräsers und des Tasters
16
6
16
Stellung der zwei Taster
16'
16''

Fig. 4

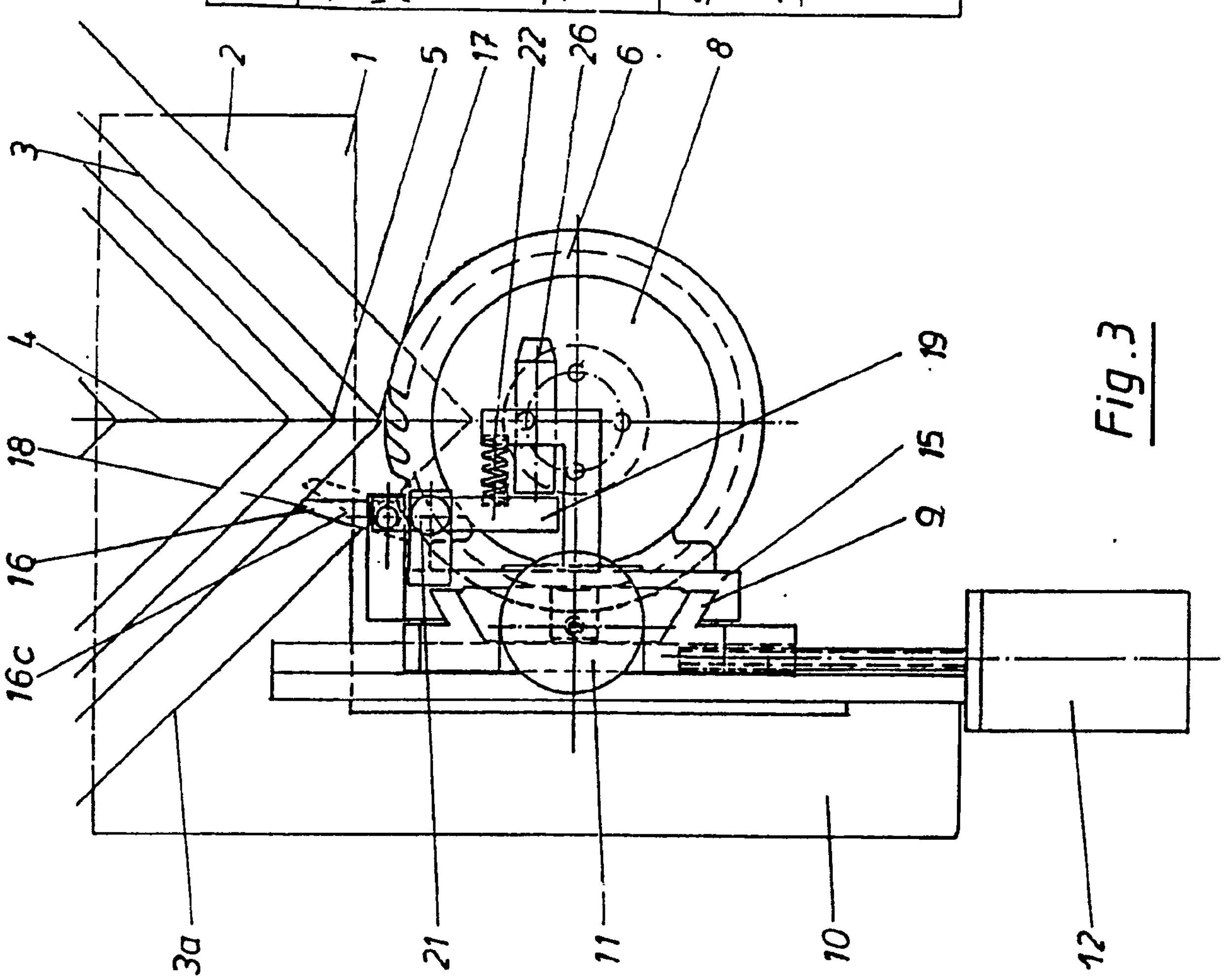
2
1
5
17
22
26
6
8
3
4
18
16
16c
19
15
9
3a
21
11
10
12

Fig. 3

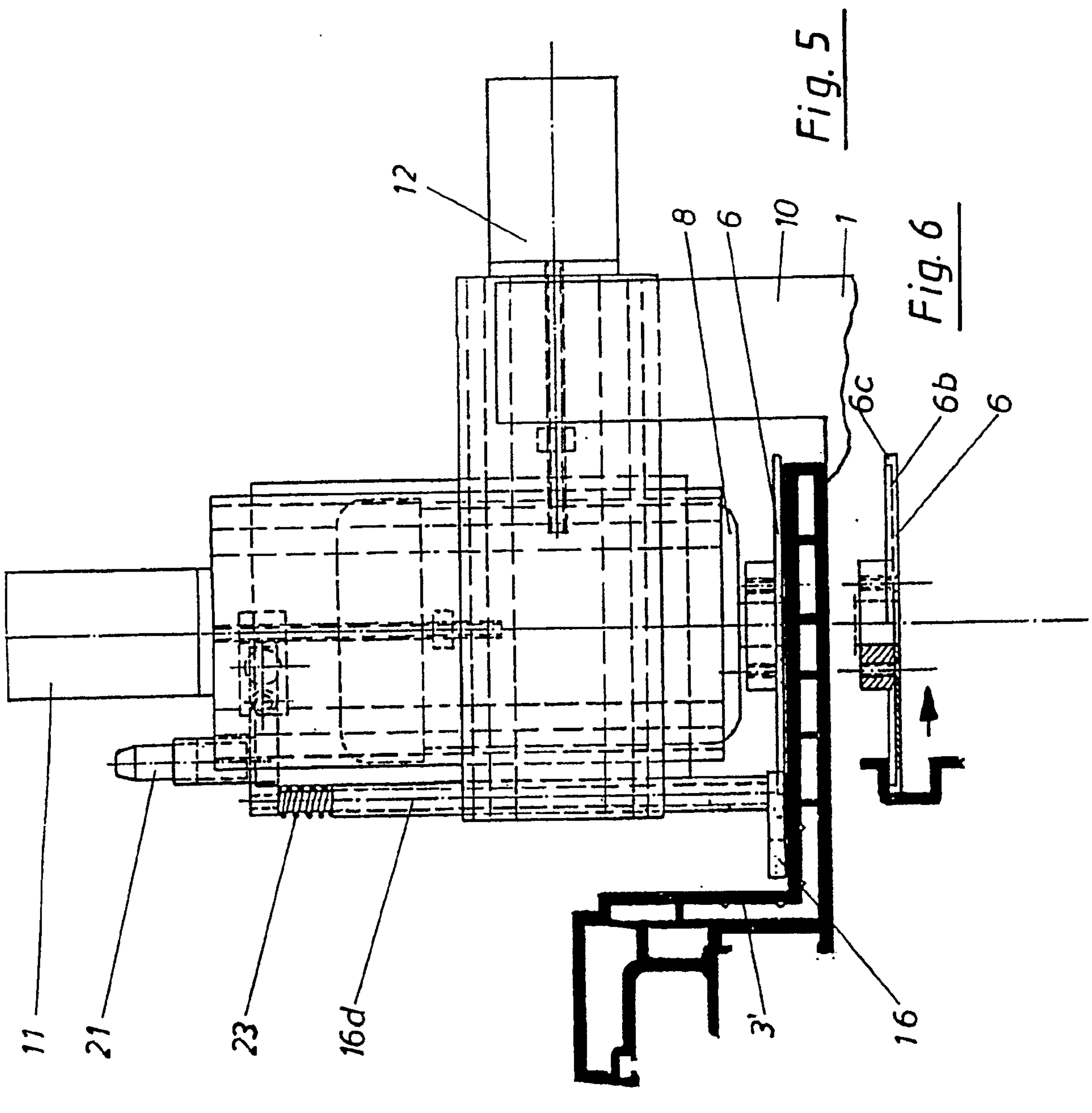


Fig. 5

Fig. 6